(19) Europäisches Patentamt / European Patent Office / Office européen des brevets

(11) **EP 1 930 753 B1**

(12) **EUROPEAN PATENT SPECIFICATION**

(45) Date of publication and mention
of the grant of the patent:
**18.02.2015  Bulletin 2015/08**

(51) Int Cl.:
*G02B 6/036* *(2006.01)*       *G02B 6/02* *(2006.01)*

(21) Application number: **06291866.9**

(22) Date of filing: **04.12.2006**

(54) **Optical fiber with high Brillouin threshold power and low bending losses**

Optische Glasfaser mit hohem Brillouin-Leistungsgrenzwert und niedrigen Krümmungsverlusten

Fibre optique à seuil de puissance de Brillouin élevé et faible perte par courbure

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**11.06.2008  Bulletin 2008/24**

(73) Proprietor: **Draka Comteq B.V.
1083 HJ  Amsterdam (NL)**

(72) Inventors:
  • **Flammer, Ivo**
    **75009 Paris (FR)**
  • **De Montmorillon, Louis-Anne**
    **78000 Versailles (FR)**
  • **Matthijsse, Pieter**
    **5522 AA Hapert (NL)**

(74) Representative: **Algemeen Octrooi- en
Merkenbureau B.V.
P.O. Box 645
5600 AP Eindhoven (NL)**

(56) References cited:
EP-A- 1 674 901        EP-A- 1 762 867
EP-A1- 1 477 831       WO-A-02/19576
WO-A1-2006/043698      WO-A1-2006/046467
JP-A- 6 196 778        JP-A- 2006 133 314
US-A1- 2003 142 938    US-A1- 2003 223 717
US-A1- 2006 039 665    US-A1- 2006 103 919

• MATSUO S ET AL: "LOW-BENDING-LOSS AND
LOW-SPLICE-LOSS SINGLE-MODE FIBERS
EMPLOYING A TRENCH INDEX PROFILE" IEICE
TRANSACTIONS ON ELECTRONICS,
ELECTRONICS SOCIETY, TOKYO, JP, vol. E88-
C, no. 5, May 2005 (2005-05), pages 889-895,
XP001231156 ISSN: 0916-8524

**Description**

The invention relates to the field of optical fiber transmission, and more specifically to an optical fiber having reduced losses due to stimulated Brillouin scattering (SBS) and reduced bending and microbending losses.

A refractive index profile of an optical fibre is a graphical representation of the value of the refractive index as a function of the radius in the optical fibre.In a standard manner abscises represent the distance r to the centre of the fiber and ordinates represent the difference between the refractive index of the core and the refractive index of the fiber cladding. Thus an optical fibre refractive index profile is referred to as "step", "trapezoid", "parabolic or "triangle" for graphical representations which have step, trapezoid or triangle respective shapes. These curves are generally representative of the theoretical shape or reference index profile of the fiber, the fiber manufacturing constraints can lead to a slightly different shape.

An optical fiber is typically composed of an optical core, having the function of transmitting and possibly amplifying an optical signal, and an optical cladding, having the function of confining the optical signal in the core. For this reason, the refractive indexes of the core $n_c$ and of the outside cladding ng are such that $n_c > n_g$. As commonly known, the propagation of an optical signal in a single-mode optical fiber is divided into a guided dominant mode in the core and into guided secondary modes over a certain distance throughout the core-cladding, called cladding modes.

Optical fibers are key components in modern telecommunication systems. Operators are constantly concerned about increasing the optical power transmitted along the fiber while limiting aging and losses of the optical fibre. For logistical reasons, operators are concerned about reducing the number of different type of fibers and are willing to use the same type of fibers as feeder and termination fibers and as line fibers. Termination fibers need to have low bending sensitivity as they generally show low bending radii in their installation and feeder fibers need to have reduced Brillouin scattering as they distribute high input power into the telecommunication system.

As known *per se,* one limitation for use of such fibers for telecommunication applications is loss due to stimulated Brillouin scattering (SBS). SBS is an optical nonlinearity due to interaction of optical photons with acoustic phonons of the glass matrix constituting the optical fiber. SBS limits the maximum optical power throughput of the optical fiber transmission system; as input power increases above what is known as the Brillouin threshold, the power that can be transmitted along the optical fiber reaches an upper limit. Any additional input power to the optical fiber scatters in the backward direction due to interaction with acoustic phonons rather than propagating in the forward, launch direction as a higher power signal. Thus SBS, as it is called, reduces the signal to noise ratio at the receiver and can cause the transmitter to become unstable due to the entry of reflected light. Moreover, the increasing use of optical amplifiers, solid state Nd:YAG lasers at ever increasing data rates over longer and longer distances all combine to exacerbate SBS.

Techniques suggested in the literature to increase the Brillouin threshold, minimize the detrimental effects of SBS and increase the power handling capacity of the optical fiber rely, e.g., on broadening either the photon energy spectrum of the source or the phonon energy spectrum of the glass to reduce the efficiency of the interaction. A broadening of the spontaneous Brillouin spectrum width will increase the Brillouin threshold. This can be achieved by making the Brillouin frequency shift to vary in the fiber section or along the fiber length.

EP1806599 relates to an optical fiber comprising a center core and a cladding located at an outer periphery of the core, wherein the core comprises an inner core located in the vicinity of the center and an outer core provided at an outer periphery of the inner core, the inner core comprises a codoped layer made from silica glass doped with germanium and fluorine, and the outer core comprises a lower-concentration codoped layer made from silica glass doped with germanium, or silica glass that is doped with germanium and fluorine wherein a dope amount of the fluorine is smaller than a dope amount of the fluorine in the inner core. The concentration of the germanium is in a range between 4% and 15% by mass in terms of germanium oxide, and a concentration of the fluorine is in a range between 0.2% and 5% by mass, in the inner core.

EP-A-0839 770 proposes modulating drawing tension along the fiber to suppress SBS with no significant change in fiber loss or dispersion factors.

JP-A-09-311231 proposes changing the refractive index profile along the length of the fiber (axial direction) by varying the background fluorine concentration.

WO-A-2004/027941 proposes changing the refractive index profile along the length of the fiber by application of ultraviolet radiation or by thermal treatment.

JP-A-09-048629 discloses an optical fiber comprising a core region where Germanium dopant decreases from a central part to an outer periphery and fluorine dopant decreases from the outer periphery to the central part. The glass viscosity in the fiber cross section is therefore uniformly adjusted to prevent residual stress during fiber drawing.

JP-A-09-218319 discloses an optical fiber with reduced Brillouin scattering. The core diameter varies in the longitudinal direction of the optical fiber and includes a first dopant to increase a refractive index and to lower the velocity of longitudinal acoustic waves and a second dopant to lower the refractive index and to lower the longitudinal acoustic waves.

US-A-2002/0118935 proposes an irregular coating surrounding the optical cladding that varies in a lengthwise direction in order to alter the mode profile of the acoustic waves.

"Stimulated Brillouin Scattering suppression by means of applying strain distribution to fiber with cabling", N. Yoshizawa et al., IEEE JLT, Vol 11, No 10, pp 1518-1522, 1993 proposes wrapping the fiber around a central rod to induce stress to change the energy distribution of acoustic phonons.

Some disadvantages of changing the index of refraction along the axial direction of the fiber, and tight fiber wrapping, include non-uniform fiber properties (splicing characteristics, Raman gain, cut-off wavelength) along the fiber length and increased fatigue which impacts fiber lifetime.

US-A-6 542 683 proposes broadening the energy spectrum of participating SBS phonons by providing a fiber core comprising alternating layers of glass modifying dopant leading to nonuniform thermal expansion and viscosity profiles that impart a residual permanent nonuniform stress in the fiber section. At least two layers of differing coefficients of thermal expansion (CTE) and viscosities generate strain variation in the fiber section which in turn generates Brillouin frequency shift variation, and hence linewidth increase of the mode.

CTE and viscosity control in alternating layers is hard to achieve and manufacturing process to obtain a preform of doped and undoped layers within the core requires costly equipments. Moreover, whenever the core is doped, fiber losses increase, especially when dopant concentrations have sharp variations. Such sharp variations will induce silica network defects at its interfaces causing increased absorption loss of the fiber and degraded aging behaviour.

US-A-6 587 623 proposes controlling the acoustic waves to be badly guided in the fiber core, such to reduce photon-phonon interaction and thus reduce SBS effect. However, such an optical fiber is difficult to achieve as the optical fiber refractive index profile must fulfill at the same time good light guiding and bad acoustic guiding. In the effort of optimising for SBS effect, drawbacks in optical transmission properties are expected.

"Effective stimulated Brillouin gain in single mode optical fibers", J. Botineau et al., Electronics Letters, November 9, 1995, Vol. 31, No. 23, establishes that trapezoid refractive index profile fiber allow to achieve a higher Brillouin threshold compared to step refractive index profile. However, trapezoid profile shapes might not be best suited for a specific telecommunication application.

US-A-2004/0218882 discloses an optical fiber having a high SBS threshold. The core comprises three regions with a specific doping scheme. However, the fiber refractive index profile disclosed in this document is not best suited for a specific telecommunication application.

For the needs of compatibility between the optical systems of different manufacturers, the International Telecommunication Union (ITU) has laid down a standard referenced ITU-T G.652 which must be met by a Standard Single Mode Fiber (SSMF).

This G.652 standard for transmission fibers, recommends *inter alia*, a range of [8,6 - 9,5$\mu$m] for the Mode Field Diameter (MFD) at a wavelength of 1310 nm; a maximum of 1260 nm for the cabled cut-off wavelength; a range of [1300- 1324 nm] for the dispersion cancellation wavelength denoted $\lambda_0$; a maximum of 0,092 ps/nm$^2$-km for the chromatic dispersion slope. The cabled cut-off wavelength is conventionally measured as the wavelength at which the optical signal is no longer single-mode after propagation over twenty-two meters of fiber, such as defined by sub-committee 86A of the International Electrotechnical Commission under standard IEC 60793-1-44.

The effort to increase SBS threshold should not result in overstepping the G.652 standard.

Moreover, high optical power in transmission optical fibers risk to damage the fiber coating and thus accelerate aging of the optical fibre whenever bends are present. Reducing bending sensitivity of an optical fiber having a high Brillouin threshold would reduce aging problems of high power applications.

In addition, as indicated above, operators are also willing to reduce bending sensitivity of the fiber for use as termination fibers.

Typical solutions to reduce bending losses are to influence on the MAC value. For a given fiber, a so-called MAC value is defined as the ratio of the mode field diameter of the fiber at 1550 nm to the effective cut-off wavelength $\lambda c_{eff}$. The effective cut-off wavelength is conventionally measured as the wavelength at which the optical signal is no longer single-mode after propagation over two meters of fiber such as defined by sub-committee 86A of the International Electrotechnical Commission under standard IEC 60793-1-44. The MAC value is used to assess fiber performance, in particular to find a compromise between mode field diameter, effective cut-off wavelength and bending losses.

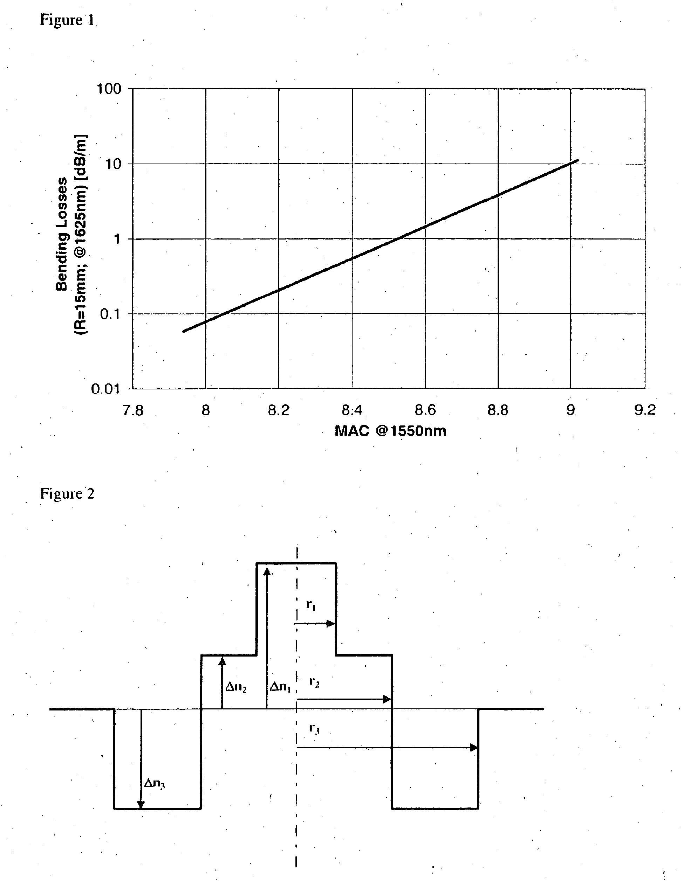

Figure 1 illustrates the experimental results of the applicant giving the bending losses at a wavelength of 1625 nm with a bend radius of 15 mm in a standard SSMF fiber in relation to the MAC value at a wavelength of 1550 nm. It can be seen that the MAC value influences the bending losses of the fiber and that these bending losses may be reduced by reducing the MAC value.

However, a reduction in the MAC value by reducing the mode field diameter and/or by increasing the effective cut-off wavelength, may lead to overstepping the G.652 standard, making the optical fiber commercially incompatible with some transmission systems.

Heed of the G.652 standard while reducing bending losses and increasing SBS threshold is a true challenge for applications of fibers intended for single access optical fiber to be used both in long-haul transmission system and in Fiber To The Home (FTTH) or Fiber To The Curb (FTTC) systems.

The publication by S. Matsuo et al. "Bend-Insensitive and Low Splice-Loss Optical Fiber for Indoor Wiring in FTTH", OFC'04 Proceedings, paper Th13 (2004) describes a refractive index profile for single mode fiber (SMF) which enables a reduction in bending losses. However, this fiber shows a chromatic dispersion of between 10,2 ps/nm-km and 14,1 ps/nm-km which lies outside the G.652 standard.

The publication by S. Matsuo et al. "Low bending loss and low splice loss single mode fibers employing a trench profile", IEICE Trans. Electron. Vol.E88-C, N°5, May 2005 describes an optical fiber having a central core, a first inner cladding and a trench. Some of the fiber examples described in this document also meet the criteria of the G.652 standard.

The publication by I. Sakabe et al. "Enhanced Bending Loss Insensitive Fiber and New Cables for CWDM Access Networks", 53rd IWCS Proceedings, pp. 112-118 (2004) proposes reducing the Mode Field Diameter to reduce bending losses. This reduction in mode field diameter leads to overstepping the G.652 standard however.

The publication by K. Bandou et al. "Development of Premise Optical Wiring Components Using Hole-Assisted Fiber" 53rd IWCS Proceedings, pp. 119-122 (2004) proposes a hole assisted fiber having the optical characteristics of a standard SSMF fiber with reduced bending losses. The cost of manufacturing said fiber and the high attenuation levels at the present time ( >0.25 dB/km) make it difficult to be given commercial use in FTTH systems.

The publication by T. Yokokawa et al. "Ultra-Low Loss and Bend Insensitive Pure-Silica-Core Fiber Complying with G.652 C/D and its Applications to a Loose Tube Cable", 53rd IWCS Proceedings, pp 150-155 (2004) proposes a pure silica core fiber PSCF, having reduced transmission and bending losses, but with a reduced mode field diameter lying outside the G.652 standard.

US-A-6 771 865 describes the refractive index profile of a transmission fiber with reduced bending losses. The optical fiber has a central core, an annular inner cladding and an optical outer cladding. The annular cladding is doped with Germanium and Fluorine. The information given in this document does not enable determination of whether or not the fiber meets the criteria laid down by the G.652 standard.

US-A-4 852 968 describes the profile of a transmission fiber having reduced bending losses. However this fiber has a chromatic dispersion which does not meet the criteria of standard G.652; the G.652 standard requires cancellation of chromatic dispersion at wavelengths of between 1300 nm and 1324 nm, but the fiber described in US 4,852,962 shows cancellation of chromatic dispersion at the wavelengths of between 1400 nm and 1800 nm.

WO-A-2004/092794 describes the refractive index profile of a transmission fiber with reduced bending losses. The fiber has a central core, a first inner cladding, a second depressed inner cladding and an outer optical cladding. Some of the fiber examples described in this document also meet the criteria of the G.652 standard. The fiber described in this document is manufactured by Vapor phase Axial Deposition (VAD) or Chemical Vapor Deposition (CVD). The fiber described in this document does not however identify the problems of microbending losses nor of Brillouin scattering.

There is therefore a need for a transmission fiber with which it is possible to meet the criteria of the G.652 standard, i.e. which can be given commercial use in transmission systems of FTTH type, and which shows both reduced bending and microbending losses and increased stimulated Brillouin scattering threshold. Such fiber could be used as a single access fiber, i.e. a line fiber for long-haul transmission applications and a feeder fiber or a termination fiber in FTTH applications.

There is therefore a need for an optical fiber with reduced bending losses and increased Brillouin threshold without change of the fiber transmission characteristics, i.e. without change of the fiber index profile and with limited fiber loss increase.

Accordingly, the invention proposes a single mode optical fiber according to claim 1.

According to embodiments, the optical fiber of the invention may comprise one or more of the following additional features:

- the radial concentration of each of said at least two core dopants varies continuously over the entire core region;
- the optical fiber has, at a wavelength of 1550 nm, a spontaneous Brillouin spectrum width equal or larger to 100 MHz;
- the variation of at least one core dopant concentration corresponds to a refractive index variation greater than or equal to $1.10^{-3}$;
- the at least two core dopants are chosen from a group consisting of Ge, F, P, Al, Cl, B, N and alkali metals;
- one of said core dopants is Germanium (Ge), the concentration of which lies in a range of 1 wt% to 20 wt% based on the total composition of material making up said core at the radius of said radial concentration
- one of said core dopants is Fluorine (F), the concentration of which lies in a range of 0.3 wt% to 8 wt% based on the total composition of material making up said core at the radius of said radial concentration;
- one of said core dopants is Phosphorus (P), the concentration of which lies in a range of 1 wt% to 10 wt% based on the total composition of material making up said core at the radius of said radial concentration;
- the second, depressed, inner cladding includes Germanium in a radial concentration of between 0,5wt% and 7wt% based on the total composition of material making up second depressed inner cladding at the radius of said radial concentration;
- the refractive index difference $\Delta n_3$ of the second inner cladding with the outer cladding is greater than $-15.10^{-3}$;

- the optical fiber has, at a wavelength of 1550 nm, an effective area greater than or equal to 50 $\mu m^2$;
- the optical fiber has, at a wavelength of 1550 nm, an attenuation smaller than or equal to 0.3 dB/km;
- the optical fiber has, at a wavelength of 1625 nm, bending losses that are 0,1 dB or less for a winding of 10 turns around a bend radius of 15 mm; 0,2 dB or less for a winding of one turn around a bend radius of 10 mm; and 0,5 dB or less for a winding of one turn around a bend radius of 7,5 mm;
- the optical fiber has, at a wavelength of 1550 nm, bending losses that are 0,02 dB or less for a winding of 10 turns around a bend radius of 15 mm; 0,05 dB or less for a winding of one turn around a bend radius of 10 mm; and 0,2 dB or less for a winding of one turn around a bend radius of 7,5 mm;
- the optical fiber has, up to a wavelength of 1625 nm, microbending losses, measured by the so-called fixed diameter drum method, of 0,8 dB/km or less.

The invention also relates to an optical module or a storage box comprising a housing receiving at least a wound portion of the optical fiber according to the invention.

According to embodiments, the optical fiber is wound with a bending radius being less than 15 mm or less than 10 mm in the optical module or the storage box of the invention.

The invention also relates to a Fiber To The Home (FTTH) or Fiber To The Curb (FTTC) optical system comprising at least one optical module or one storage box according to the invention.

Other characteristics and advantages of the invention will become clearer upon reading the description that follows the embodiments of the invention, given by way of example and in reference to the annexed drawings, which illustrate:

- figure 1, previously described, a graph illustrating the bending losses at a wavelength of 1625 nm with a bend radius of 15 mm in a standard single-mode fiber in relation to the MAC value at a wavelength of 1550 nm;
- figure 2, a graph showing the nominal profile of a single-mode fiber according to one embodiment of the invention;
- figure 3a, a graphic representation of a reference refractive index profile of an optical fiber according to an example of the invention;
- figure 3b, a graphic representation of Germanium dopant concentration in the optical fiber of figure 3a;
- figure 3c, a graphic representation of Fluorine dopant concentration in the optical fiber of figure 3a;
- figure 4, a graph illustrating dispersion characteristics for four different type of fibers.

The optical fiber of the invention comprises a central core region, where the optical signal to be transmitted is guided, and a cladding region for confining the optical signal in the core. The cladding region includes a first inner cladding, a depressed trench (or second depressed inner cladding) and an outer cladding. The depressed trench has a refractive index difference with the outer cladding that is less than $-3.10^{-3}$ and may reach $-15.10^{-3}$.

According to the invention, the core region of the optical fiber includes at least two dopants the concentrations of which vary continuously over the entire radius of the core region. The variation of the first dopant, Germanium, is compensated by variation of the second dopant, Fluorine, to obtain a pre-determined refractive index profile of the core region. The core region remains longitudinally homogeneous along the optical fiber, i.e. the concentrations of the core dopants is constant in the longitudinal direction of the optical fiber. The optical fiber has a given refractive index profile defined according to various parameters depending on the application, i.e. mode field diameter, chromatic dispersion parameters, effective cut-off wavelength, effective area.

Variation of dopant concentration in a radial direction of the optical fiber, in particular in the core of the optical fiber, allows broadening the Brillouin spectrum and therefore increases the Brillouin threshold. A smooth dopant variation ensures uniform mode power repartition for the different dopant concentrations and limits fiber losses. Use of at least two allows to achieve a given refractive index profile for the optical fiber and reduces the impact of SBS reduction on other optical parameters of the optical fiber, in particular mode field diameter and chromatic dispersion parameters. The refractive index profile of the optical fiber is such that it fulfils the G.652 standard defined previously.

With reference to figure 2 showing a nominal refractive index profile of an embodiment of the invention, the single-mode transmission optical fiber of the invention comprises a central core having refractive index difference $\Delta n_1$ with an outer cladding, a first inner cladding having a refractive index difference $\Delta n_2$ with the outer cladding and a depressed trench having a refractive index difference $\Delta n_3$ with the outer cladding. The width of the core is defined by its radius $r_1$ and the width of the claddings by their respective outer radii $r_2$ and $r_3$.

To define a nominal refractive index profile for an optical fiber, the index of the outer cladding is generally taken as reference. The index values of the central core and of the claddings are then given as index differences $\Delta n_{1,2,3}$. Generally, the outer cladding is formed of silica, but this outer cladding may be doped to increase or reduce its refractive index, for example to modify the signal propagation characteristics.

Each section of the refractive index profile of the optical fibre can therefore be defined using integrals which associate the variations in refractive indexes with the radius of each fiber section.

Three integrals can hence be defined for the optical fiber, which represent the core surface $I_1$, the surface of the first inner cladding $I_2$ and the surface of the second, depressed, inner cladding $I_3$. The expression "surface" is not to be interpreted geometrically but corresponds to a value taking two dimensions into account. These three integrals can be expressed as follows:

$$I_1 = \int_0^{r1} \Delta n(r) \cdot dr \approx r_1 \times \Delta n1$$

$$I_2 = \int_{r1}^{r2} \Delta n(r) \cdot dr \approx (r_2 - r_1) \times \Delta n2$$

$$I_3 = \int_{r2}^{r3} \Delta n(r) \cdot dr \approx (r_3 - r_2) \times \Delta n3$$

Table I below gives the limit values of radii and refractive index differences, and the limit values of the integral $I_1$ that are required so that the fiber shows reduced bending losses and microbending losses whilst meeting the optical propagation criteria of standard G.652 for transmission fibers. The values given in the table are the nominal profiles of the optical fibers.

TABLE I

|  | $r_1$ ($\mu$m) | $r_2$ ($\mu$m) | $r_3$ ($\mu$m) | $r_1/r_2$ | $\Delta n_1$ ($.10^{-3}$) | $\Delta n_2$ ($.10^{-3}$) | $\Delta n_3$ ($.10^{-3}$) | $\Delta n_1$- $\Delta n_2$ ($.10^{-3}$) | $I_1$ ($\mu$m$.10^{-3}$) |
|---|---|---|---|---|---|---|---|---|---|
| Min | 3,5 | 7,5 | 12,0 | 0,27 | 4,2 | -1,2 | -15 | 3,9 | 17 |
| Max | 4,5 | 14,5 | 25,0 | 0,5 | 6,2 | 1,2 | -3 | 5,9 | 24 |

The integral $I_1$ of the central core influences the shape and size of the fundamental propagation mode of the signal in the optical fiber. An integral value for the central core of between $17.10^{-3}$ $\mu$m and $24.10^{-3}$ $\mu$m makes it possible in particular to maintain a mode field diameter that is compatible with the G.652 standard. In addition, the depressed trench $\Delta n_3$ makes it possible to improve bending and microbending losses with respect to the losses of standard SSMF fiber.

According to the invention, the core region of the optical fiber includes at least two dopants the concentrations of which vary continuously over the entire core region while maintaining a pre-determined refractive index profile of the core region. This allows broadening the Brillouin spectrum and therefore increases the Brillouin threshold. Because the dopant concentration variation is compensated for to keep a pre-determined refractive index profile, notably in the core region, the optical propagation criteria of standard G.652 are not jeopardized by the presence of at least two dopants in the core. Moreover, the first inner cladding ($\Delta n_2$, $r_2$) ensures that the optical power remains in the core region without the depressed trench ($\Delta n_3$, $r_3$) impacting on the optical power throughput.

The optical fiber of the invention has, for a signal propagating at a wavelength of 1550 nm, a spontaneous Brillouin spectrum width equal or larger to 100 MHz. Such a broadened Brillouin spectrum allows increasing the Brillouin threshold by at least a factor 2 (or by 3dB in logarithmic scale) compared to standard single mode fiber (SSMF). The optical fiber of the invention achieves a much higher Brillouin threshold compared to standard transmission fibers with limited fiber loss, less than 0.3 dB/km at a wavelength of 1550 nm, and without significant change in the optical transmission parameters of the fiber.

The first core dopant, Germanium for instance, is chosen to achieve strong and continuous variations in density and elasticity in the fiber material. The radial distribution of the first dopant concentration $C_d(r)$ is such that its first derivative is proportional to the radial power fraction P(r) of the optical signal transmitted in the fiber, according to the following relation:

$$\frac{dC_d(r)}{dr} = \alpha \cdot P(r)$$

with $\alpha$ being a constant value.

This radial power fraction P(r) is expressed in Watt per meter, the integral of which is equal to the total transmitted power P according to the following relation:

$$\int P(r)dr = P$$

According to a possible embodiment, the depressed trench can also include some Germanium, in a weight concentration of between 0,5% and 7%, and preferably in a weight concentration of between 0,5% and 1,5% even if the index needs to be less than $-3.10^{-3}$. The presence of Germanium in the depressed trench modifies the viscosity of silica and the elasto-optical coefficient in this said cladding to improve microbending sensitivity.

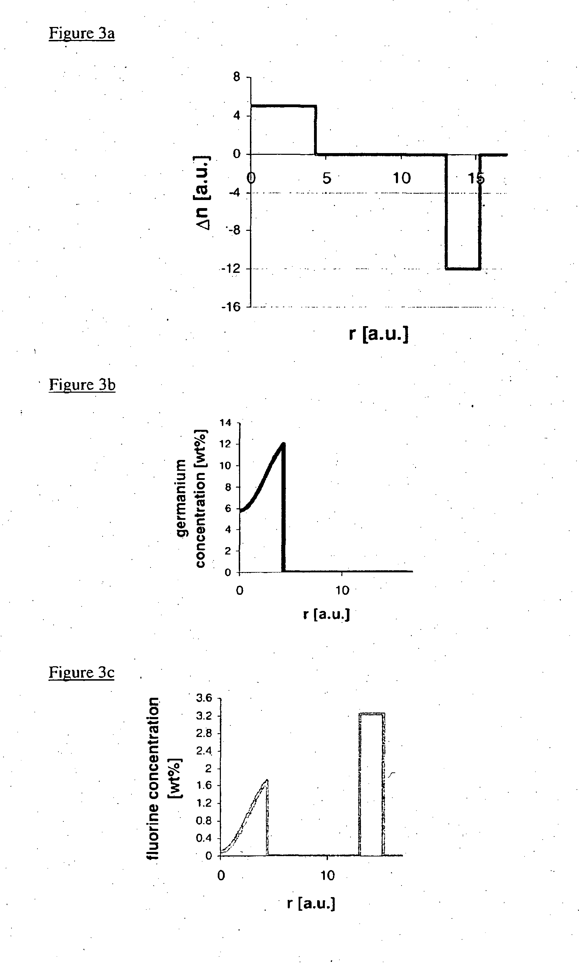

Figures 3a to 3c illustrate an example of the optical fiber according to the invention.

The optical fiber of figures 3a-c has a core step profile with the core having a given constant refractive index value and a depressed trench separated from the core by an intermediate inner cladding. Figure 3a illustrates the refractive index profile with arbitrary units.

Turning to figures 3b and 3c, the core region of the fiber includes a first dopant, Germanium (Ge) known to increase the value of the refractive index of silica, and a second dopant, Fluorine (F) known to decrease the value of the refractive index of silica. Figures 3b-c illustrate dopant concentrations in wt%. According to the invention, the concentration of at least one of the core dopants varies continuously over the entire core region. In the example of figure 3, both dopants vary continuously over the entire core region. The use of at least two dopants guarantees that the core refractive index profile is maintained to a nominal profile such to comply with given optical transmission characteristics. Indeed, because the second dopant can compensate for the refractive index variation introduced by the variation of concentration of the first dopant, a given refractive index profile can be achieved.

The variation of at least one core dopant concentration introduces density and elasticity variation in the optical fiber section that broadens the Brillouin spectrum and therefore increases the Brillouin threshold. The variation of core dopant concentration should be large enough to introduce sufficient density and elasticity variation in order to reduce SBS. It was established by the inventors that satisfying results could be obtained if at least one of the core dopants has a variation of concentration over the entire core region corresponding to an index variation superior or equal to $1.10^{-3}$; i.e. that would be the index variation imparted by the core dopant concentration variation if not compensated by another core dopant.

Returning to figures 3b-c, the Germanium concentration varies continuously from 5.8 wt% (percentage per weight) to 12 wt%; and the Fluorine concentration varies continuously from 0.1 wt% to 1.7 wt%.

The smooth and regular variation of dopant concentration ensures uniform mode power repartition for the different dopant concentration and limits fiber losses. Simulations made on an optical fiber exemplified in figures 3a-c gives, at a signal wavelength of 1550 nm, a spontaneous Brillouin spectrum width larger then 100 MHz and a SBS threshold power increased by at least a factor 2 compared to standard single mode fiber, and a limited Rayleigh loss increase of about 0,013 dB/km. Despite this Rayleigh loss increase, the optical fiber of the invention remains G.652 standard compliant with attenuation losses inferior or equal to 0,3 dB/km at 1550 nm.

Figures 3a-c were given as example to the invention. Other dopants than Germanium (Ge) and Fluorine (F) can be used to achieve the fiber with reduced SBS according to the invention. The core region includes at least two dopants chosen from the group consisiting of Ge, F, P, Al, Cl, B, N and alkali metals. Whenever one of said core dopants is Germanium (Ge), the concentration may lie in a range of 1 wt% to 20 wt%; whenever one of said core dopant is Fluorine (F), the concentration may lie in a range of 0.3 wt% to 8 wt%; whenever one of said core dopant is Phosphorus (P), the concentration may lie in a range of 1 wt% to 10 wt%.

The fiber of figures 3a-c also has a depressed trench to reduce the sensitivity to bending losses of the optical fiber. The optical fiber of the invention therefore combines low bending losses and high Brillouin threshold.

Typically, starting from the teaching of J. Botineau et al. in the above mentioned publication "Effective stimulated Brillouin gain in single mode optical fibers", Electronics Letters, November 9, 1995, Vol. 31, No. 23, a refractive index profile with triangular shape or parabolic shape would be chosen by the man of the art to increase the Brillouin threshold and an external trench would be applied to reduce bending losses. However, a simple combination of these two properties makes it difficult for the fiber to fulfill the G.652 specifications.

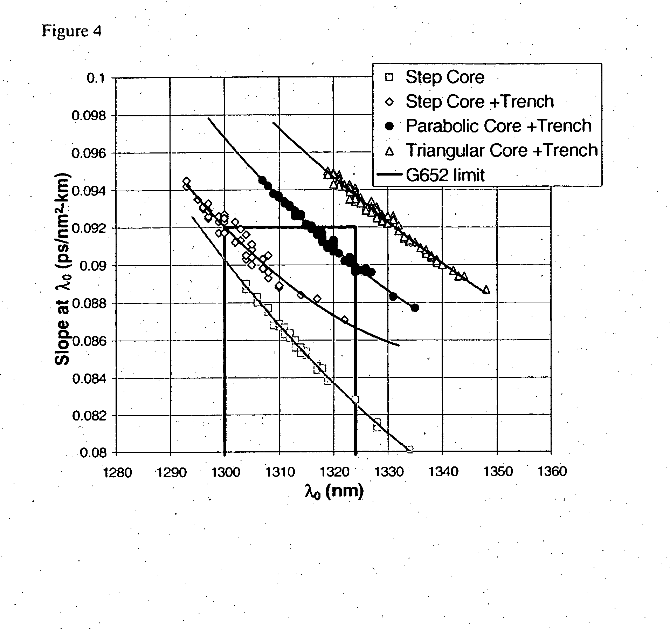

Figure 4 shows a graph comparing four different types of refractive index profile shapes: a typical step refractive index profile without trench (SSMF), a step core refractive index profile with a trench in the cladding (fiber of figures 3a-c), a triangular core refractive index profile with a trench in the cladding and a parabolic core profile with a trench in the cladding. For each profile type, a large number of refractive index profiles with different core diameter and maximum dopant level were simulated.

Figure 4 shows the zero dispersion wavelength $\lambda_0$ and the slope of the dispersion at the zero dispersion wavelength. The rectangle indicates the borders of the G.652 specifications for those optical characteristics. The fiber profiles having too high cut-off wavelength and non-conform nominal mode-field diameter at 1310 nm to comply with G.652 specifications were omitted.

Figure 4 shows that adding a depressed trench to a SSMF profile already slightly restricts the profile flexibility for production and thus increases fiber rejection rate. Using a triangular core refractive index profile with a trench in the cladding results in optical fibres which do not fulfill the G.652 requirements. A parabolic core refractive index profile with a trench in the cladding does allow some optical fibers within the G.652 specifications, but the zone of tolerance is very narrow and many rejects are expected.

The optical fiber of the invention achieves reduced bending and microbending losses as well as a much higher Brillouin threshold compared to standard transmission optical fibers. The optical fiber of the invention may be used in a receiver module of a FTTH system or in a transmitter module to input high power signal into a telecommunication system or in a high bit-rate long-haul optical transmission cable, with reduced optical losses. The inventive optical fiber is compatible with marketed systems since it meets standard G.652.

Notably, the optical fiber of the invention exhibits, at a wavelength of 1310 nm, a chromatic dispersion slope of 0,092 ps/nm$^2$-km or less; a cancellation of chromatic dispersion at a wavelength of between 1300 and 1324 nm and a cabled cut-off wavelength of 1260 nm or less.

The optical fiber of the invention has, at a wavelength of 1550 nm, an effective area superior or equal to 50 $\mu$m$^2$, typically 80 $\mu$m$^2$, and attenuation inferior or equal to 0,3 dB/km at 1550 nm. Such fiber is suitable for use in data transmission in telecommunication systems. Such optical transmission system may comprise an optical transmitter emitting optical signals in a predetermined range of wavelength, a transmission optical fiber being the optical fiber of the invention and an optical receiver receiving the optical signal with improved signal to noise ratio (SNR) due to reduced SBS and limited fiber losses increase. The optical transmitter may input an optical signal with higher power into the optical fiber, compared to system of the prior art; the Brillouin threshold power for the transmission optical fiber being increased by at least a factor 2 compared with SMF.

The optical fiber of the invention also has, at a wavelength of 1625 nm, bending losses of 0,1 dB or less for a winding of 10 turns around a bend radius of 15 mm; of 0,2 dB or less for a winding of one turn around a bend radius of 10 mm and of 0,5 dB or less for a winding of 1 turn around a bend radius of 7,5 mm. The optical fiber of the invention also has, at a wavelength of 1550 nm, bending losses of 0,02 dB or less for a winding of 10 turns around a bend radius of 15 mm; of 0,05 dB or less for a winding of one turn around a bend radius of 10 mm and of 0,2 dB or less for a winding of 1 turn around a bend radius of 7,5 mm. Moreover, up to a wavelength of 1625 nm, the optical fiber of the invention shows microbending losses, measured by the so-called fixed diameter drum method, of 0,8 dB/km or less. Such optical fiber is suitable for implementation in optical modules or storage boxes for use in FTTH or FTTC systems.

**Claims**

1. A single mode optical fiber having a core step profile and a cabled cut-off wavelength of 1260 nm or less, comprising:

   - a core including at least two co-dopants and having a radius $R_1$ and an index difference $\Delta n_1$ with an outer optical cladding;
   - a first inner cladding having a radius $R_2$ and an index difference $\Delta n_2$ with the outer cladding;
   - a second, depressed, inner cladding having a radius $R_3$ and an index difference $\Delta n_3$ with the outer cladding of less than -3.10$^{-3}$,
   **characterized in that** the radial concentration of at least one of the core dopants varies continuously over the entire core region, wherein the radial variation of at least one core dopant concentration is such that its first derivative is proportional to the radial power fraction P(r) of the optical signal transmitted in the fiber.

2. The fiber of claim 1, wherein the radial concentration of each of said at least two core dopants varies continuously over the entire core region.

3. The fiber of any one of claims 1 to 2, wherein the optical fiber has, at a wavelength of 1550 nm, a spontaneous Brillouin spectrum width equal or larger to 100 MHz.

4. The fiber of any one of claims 1 to 3, wherein the variation of at least one core dopant concentration corresponds to an index variation superior or equal to $1.10^{-3}$.

5. The fiber of any one of claims 1 to 4, wherein the at least two core dopants are chosen in a group comprising Ge, F, P, Al, Cl, B, N and alkali metals.

6. The fiber of any one of claims 1 to 5, wherein one of said core dopants is Germanium (Ge), the concentration of which lies in a range of 1 wt% to 20 wt%.

7. The fiber of any one of claims 1 to 6, wherein one of said core dopants is Fluorine (F), the concentration of which lies in a range of 0.3 wt% to 8 wt%.

8. The fiber of any one of claims 1 to 7, wherein one of said core dopants is Phosphorus (P), the concentration of which lies in a range of 1 wt% to 10 wt%.

9. The fiber of any one of claims 1 to 8, wherein the second, depressed, inner cladding includes Germanium in a weight concentration of between 0,5% and 7 %.

10. The fiber of any one of claims 1 to 9, wherein the index difference $\Delta n_3$ of the second inner cladding with the outer cladding is greater than $-15.10^{-3}$.

11. The fiber of any one of claims 1 to 10, having at a wavelength of 1550 nm an effective surface superior or equal to 50 $\mu m^2$.

12. The fiber of any one of claims 1 to 11, having at a wavelength of 1550 nm an attenuation inferior or equal to 0.3 dB/km.

13. The fiber of any one of claims 1 to 12, having at a wavelength of 1625 nm bending losses, for a winding of 10 turns around a bend radius of 15 mm, that are 0,1 dB or less.

14. The fiber of any one of claims 1 to 13, having at a wavelength of 1625 nm, bending losses, for a winding of one turn around a bend radius of 10 mm, that are 0,2 dB or less.

15. The fiber of any one of claims 1 to 14, having at a wavelength of 1625 nm, bending losses, for a winding of one turn around a bend radius of 7,5 mm, that are 0,5 dB or less.

16. The fiber of any one of claims 1 to 15, having at a wavelength of 1550 nm, bending losses, for a winding of 10 turns around a bend radius of 15 mm, that are 0,02 dB or less.

17. The fiber of any one of claims 1 to 13, having at a wavelength of 1550 nm, bending losses, for a winding of one turn around a bend radius of 10 mm, that are 0,05 dB or less.

18. The fiber of any one of claims 1 to 14, having at a wavelength of 1550 nm, bending losses, for a winding of one turn around a bend radius of 7,5 mm, that are 0,2 dB or less.

19. The fiber of any one of claims 1 to 18, having up to a wavelength of 1625 nm, microbending losses, measured by the so-called fixed diameter drum method, of 0,8 dB/km or less.

20. An optical module comprising a housing receiving at least a wound portion of the fiber according to any one of claims 1 to 19.

21. A storage box receiving at least a wound portion of the fiber according to any one of claims 1 to 19.

22. The optical module or storage box of claim 20 or 21, wherein the fiber is wound with a bending radius being less than 15 mm.

23. The optical module or storage box of claim 20 or 21, wherein the fiber is wound with a bending radius being less than 10 mm.

24. Fiber To The Home (FTTH) or Fiber To The Curb (FTTC) optical system comprising at least one optical module or one storage box according to any one of claims 20 to 23.

**Patentansprüche**

1. Einmoden-Lichtleitfaser, die ein Kernstufenprofil und eine Kabel-Grenzwellenlänge von 1260 nm oder weniger aufweist, mit:

   - einem Kern, der wenigstens zwei Codotierstoffe und einen Radius $R_1$ sowie einen Indexunterschied $\Delta n_1$ zu einem äußeren optischen Mantel aufweist,
   - einem ersten inneren Mantel, der einen Radius $R_2$ und einen Indexunterschied $\Delta n_2$ zu dem äußeren Mantel aufweist,
   - einem zweiten, vertieften inneren Mantel, der einen Radius $R_3$ und einen Indexunterschied $\Delta n_3$ zu dem äußeren Mantel von kleiner als $-3 \cdot 10^{-3}$ aufweist,
   **dadurch gekennzeichnet, dass** sich die radiale Konzentration wenigstens eines der Kerndotierstoffe über den gesamten Kernbereich kontinuierlich ändert, wobei die radiale Änderung wenigstens einer Kerndotierstoffkonzentration derart ist, dass ihre erste Ableitung proportional zu dem radialen Leistungsanteil P(r) des in der Faser übertragenen optischen Signals ist.

2. Faser nach Anspruch 1, wobei sich die radiale Konzentration jedes der wenigstens zwei Kerndotierstoffe über den gesamten Kernbereich kontinuierlich ändert.

3. Faser nach einem der Ansprüche 1 bis 2, wobei die Lichtleitfaser bei einer Wellenlänge von 1550 nm eine spontane Brillouin-Spektralbreite von größer oder gleich 100 MHz aufweist.

4. Faser nach einem der Ansprüche 1 bis 3, wobei die Änderung wenigstens einer Kerndotierstoffkonzentration einer Indexänderung von größer oder gleich $1 \cdot 10^{-3}$ entspricht.

5. Faser nach einem der Ansprüche 1 bis 4, wobei die wenigstens zwei Kerndotierstoffe aus einer Ge, F, P, Al, Cl, B, N und Alkalimetalle enthaltenden Gruppe ausgewählt werden.

6. Faser nach einem der Ansprüche 1 bis 5, wobei einer der Kerndotierstoffe Germanium (Ge) ist, dessen Konzentration in einem Bereich von 1 Gew.-% bis 20 Gew.-% liegt.

7. Faser nach einem der Ansprüche 1 bis 6, wobei einer der Kerndotierstoffe Fluor (F) ist, dessen Konzentration in einem Bereich von 0,3 Gew.-% bis 8 Gew.-% liegt.

8. Faser nach einem der Ansprüche 1 bis 7, wobei einer der Kerndotierstoffe Phosphor (P) ist, dessen Konzentration in einem Bereich von 1 Gew.-% bis 10 Gew.-% liegt.

9. Faser nach einem der Ansprüche 1 bis 8, wobei der zweite, vertiefte innere Mantel Germanium in einer Gewichtskonzentration zwischen 0,5% und 7% aufweist.

10. Faser nach einem der Ansprüche 1 bis 9, wobei der Indexunterschied $\Delta n_3$ des zweiten inneren Mantels zu dem äußeren Mantel größer als $-15 \cdot 10^{-3}$ ist.

11. Faser nach einem der Ansprüche 1 bis 10, die bei einer Wellenlänge von 1550 nm eine Wirkfläche von größer oder gleich 50 $\mu m^2$ aufweist.

12. Faser nach einem der Ansprüche 1 bis 11, die bei einer Wellenlänge von 1550 nm eine Dämpfung von kleiner oder gleich 0,3 dB/km hat.

13. Faser nach einem der Ansprüche 1 bis 12, die bei einer Wellenlänge von 1625 nm für eine Wicklung von 10 Windungen um einen Krümmungsradius von 15 mm Krümmungsverluste hat, die 0,1 dB oder weniger betragen.

14. Faser nach einem der Ansprüche 1 bis 13, die bei einer Wellenlänge von 1625 nm für eine Wicklung von einer Windung um einen Krümmungsradius von 10 mm Krümmungsverluste hat, die 0,2 dB oder weniger betragen.

**15.** Faser nach einem der Ansprüche 1 bis 14, die bei einer Wellenlänge von 1625 nm für eine Wicklung von einer Windung um einen Krümmungsradius von 7,5 mm Krümmungsverluste hat, die 0,5 dB oder weniger betragen.

**16.** Faser nach einem der Ansprüche 1 bis 15, die bei einer Wellenlänge von 1550 nm für eine Wicklung von 10 Windungen um einen Krümmungsradius von 15 mm Krümmungsverluste hat, die 0,02 dB oder weniger betragen.

**17.** Faser nach einem der Ansprüche 1 bis 13, die bei einer Wellenlänge von 1550 nm für eine Wicklung von einer Windung um einen Krümmungsradius von 10 mm Krümmungsverluste hat, die 0,05 dB oder weniger betragen.

**18.** Faser nach einem der Ansprüche 1 bis 14, die bei einer Wellenlänge von 1550 nm für eine Wicklung von einer Windung um einen Krümmungsradius von 7,5 mm Krümmungsverluste hat, die 0,2 dB oder weniger betragen.

**19.** Faser nach einem der Ansprüche 1 bis 18, die bis zu einer Wellenlänge von 1625 nm Mikrokrümmungsverluste von 0,8 dB/km oder weniger hat, gemessen mittels des sogenannten erfahrens mit Trommel mit festem Durchmesser.

**20.** Optisches Modul mit einem Gehäuse, in dem wenigstens ein gewickelter Abschnitt der Faser nach einem der Ansprüche 1 bis 19 aufgenommen ist.

**21.** Lagerkasten, in dem wenigstens ein gewickelter Abschnitt der Faser nach einem der Ansprüche 1 bis 19 aufgenommen ist.

**22.** Optisches Modul oder Lagerkasten nach Anspruch 20 bzw. 21, wobei die Faser mit einem Krümmungsradius kleiner als 15 mm gewickelt ist.

**23.** Optisches Modul oder Lagerkasten nach Anspruch 20 bzw. 21, wobei die Faser mit einem Krümmungsradius kleiner als 10 mm gewickelt ist.

**24.** Faser-bis-in-die-Wohnung- (FTTH (Fiber To The Home)) oder Faser-biszum-Bordstein- (FTTC (Fiber To The Curb)) -Optiksystem mit wenigstens einem optischen Modul oder einem Lagerkasten nach einem der Ansprüche 20 bis 23.


**Revendications**

**1.** Fibre optique monomode ayant un profil étagé de coeur et une longueur d'onde de coupure câblée de 1260 nm ou moins, comprenant :

- un coeur comprenant au moins deux codopants et ayant un rayon $R_1$ et une différence d'indice $\Delta n_1$ avec un gainage optique extérieur ;
- un premier gainage intérieur ayant un rayon $R_2$ et une différence d'indice $\Delta n_2$ avec le gainage extérieur ;
- un deuxième gainage intérieur enfoncé ayant un rayon $R_3$ et une différence d'indice $\Delta n_3$ avec le gainage extérieur inférieure à $-3,10^{-3}$,
**caractérisée en ce que** la concentration radiale d'au moins l'un des dopants du coeur varie continûment dans la région de coeur entière, dans laquelle la variation radiale d'au moins une concentration de dopant de coeur est telle que sa dérivée première est proportionnelle à la fraction de puissance radiale P(r) du signal optique transmis dans la fibre.

**2.** Fibre selon la revendication 1, dans laquelle la concentration radiale de chacun desdits au moins deux dopants de coeur varie continûment dans la région de coeur entière.

**3.** Fibre selon l'une quelconque des revendications 1 et 2, dans laquelle la fibre optique a, à une longueur d'onde de 1550 nm, une largeur spectrale de Brillouin spontanée supérieure ou égale à 100 MHz.

**4.** Fibre selon l'une quelconque des revendications 1 à 3, dans laquelle la variation d'au moins une concentration de dopant de coeur correspond à une variation d'indice supérieure ou égale à $1,10^{-3}$.

**5.** Fibre selon l'une quelconque des revendications 1 à 4, dans laquelle lesdits au moins deux dopants de coeur sont choisis dans un groupe comprenant du Ge, F, P, Al, Cl, B, N et des métaux alcalins.

6. Fibre selon l'une quelconque des revendications 1 à 5, dans laquelle l'un desdits dopants de coeur est le germanium (Ge), dont la concentration se trouve dans une plage de 1 % en poids à 20 % en poids.

7. Fibre selon l'une quelconque des revendications 1 à 6, dans laquelle l'un desdits dopants de coeur est le fluor (F), dont la concentration se trouve dans une plage de 0,3 % en poids à 8 % en poids.

8. Fibre selon l'une quelconque des revendications 1 à 7, dans laquelle l'un desdits dopants de coeur est le phosphore (P), dont la concentration se trouve dans une plage de 1 % en poids à 10 % en poids.

9. Fibre selon l'une quelconque des revendications 1 à 8, dans laquelle le deuxième gainage intérieur enfoncé comprend du germanium en une concentration en poids entre 0,5 % et 7 %.

10. Fibre selon l'une quelconque des revendications 1 à 9, dans laquelle la différence d'indice $\Delta n_3$ du deuxième gainage intérieur avec le gainage extérieur est supérieure à - $15,10^{-3}$.

11. Fibre selon l'une quelconque des revendications 1 à 10, ayant, à une longueur d'onde de 1550 nm, une surface effective supérieure ou égale à 50 $\mu m^2$.

12. Fibre selon l'une quelconque des revendications 1 à 11, ayant, à une longueur d'onde de 1550 nm, une atténuation inférieure ou égale à 0,3 dB/km.

13. Fibre selon l'une quelconque des revendications 1 à 12, ayant, à une longueur d'onde de 1625 nm, des pertes par courbure, pour un enroulement de 10 tours autour d'un rayon de courbure de 15 mm, qui sont de 0,1 dB ou moins.

14. Fibre selon l'une quelconque des revendications 1 à 13, ayant, à une longueur d'onde de 1625 nm, des pertes par courbure, pour un enroulement d'un tour autour d'un rayon de courbure de 10 mm, qui sont de 0,2 dB ou moins.

15. Fibre selon l'une quelconque des revendications 1 à 14, ayant, à une longueur d'onde de 1625 nm, des pertes par courbure, pour un enroulement d'un tour autour d'un rayon de courbure de 7,5 mm, qui sont de 0,5 dB ou moins.

16. Fibre selon l'une quelconque des revendications 1 à 15, ayant, à une longueur d'onde de 1550 nm, des pertes par courbure, pour un enroulement de 10 tours autour d'un rayon de courbure de 15 mm, qui sont de 0,02 dB ou moins.

17. Fibre selon l'une quelconque des revendications 1 à 13, ayant, à une longueur d'onde de 1550 nm, des pertes par courbure, pour un enroulement d'un tour autour d'un rayon de courbure de 10 mm, qui sont de 0,05 dB ou moins.

18. Fibre selon l'une quelconque des revendications 1 à 14, ayant, à une longueur d'onde de 1550 nm, des pertes par courbure, pour un enroulement d'un tour autour d'un rayon de courbure de 7,5 mm, qui sont de 0,2 dB ou moins.

19. Fibre selon l'une quelconque des revendications 1 à 18, ayant, jusqu'à une longueur d'onde de 1625 nm, des pertes par microcourbure, mesurées par le procédé dit de tambour à diamètre fixe, de 0,8 dB/km ou moins.

20. Module optique comprenant un logement recevant au moins une partie enroulée de la fibre selon l'une quelconque des revendications 1 à 19.

21. Boîtier de stockage recevant au moins une partie enroulée de la fibre selon l'une quelconque des revendications 1 à 19.

22. Module optique ou boîtier de stockage selon la revendication 20 ou 21, dans lequel la fibre est enroulée avec un rayon de courbure inférieur à 15 mm.

23. Module optique ou boîtier de stockage selon la revendication 20 ou 21, dans lequel la fibre est enroulée avec un rayon de courbure inférieur à 10 mm.

24. Système optique FTTH (fibre jusqu'au domicile) ou FTTC (fibre jusqu'au trottoir) comprenant au moins un module optique ou un boîtier de stockage selon l'une quelconque des revendications 20 à 23.

Figure 1

Figure 2

Figure 3a

Figure 3b

Figure 3c

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1806599 A
- EP 0839770 A
- JP 9311231 A
- WO 2004027941 A
- JP 9048629 A
- JP 9218319 A
- US 20020118935 A
- US 6542683 A
- US 6587623 A
- US 20040218882 A
- US 6771865 A
- US 4852968 A
- US 4852962 A
- WO 2004092794 A

**Non-patent literature cited in the description**

- **N. YOSHIZAWA et al.** Stimulated Brillouin Scattering suppression by means of applying strain distribution to fiber with cabling. *IEEE JLT,* 1993, vol. 11 (10), 1518-1522
- **J. BOTINEAU et al.** Effective stimulated Brillouin gain in single mode optical fibers. *Electronics Letters,* 09 November 1995, vol. 31 (23
- **S. MATSUO et al.** Low bending loss and low splice loss single mode fibers employing a trench profile. *IEICE Trans. Electron.,* May 2005, vol. E88-C (5
- **I. SAKABE et al.** Enhanced Bending Loss Insensitive Fiber and New Cables for CWDM Access Networks. *53rd IWCS Proceedings,* 2004, 112-118
- **K. BANDOU et al.** Development of Premise Optical Wiring Components Using Hole-Assisted Fiber. *53rd IWCS Proceedings,* 2004, 119-122
- **T. YOKOKAWA et al.** Ultra-Low Loss and Bend Insensitive Pure-Silica-Core Fiber Complying with G.652 C/D and its Applications to a Loose Tube Cable. *53rd IWCS Proceedings,* 2004, 150-155